# EUROPEAN PATENT SPECIFICATION

(11) **EP 2 256 304 B1**
(45) Date of publication and mention of the grant of the patent: **11.05.2016**
(21) Application number: 10155203.2
(22) Date of filing: 02.03.2010
(51) Int. Cl.: F01D 25/24, F01D 25/26

(54) **A casing arrangement**
Gehäuseanordnung
Agencement de boîtier

(30) Priority: 24.03.2009 GB 0904973
(43) Date of publication of application: 01.12.2010
(73) Proprietor: Rolls-Royce plc, London SW1E 6AT (GB)
(72) Inventor: Mulcaire, Thomas Gerard, Derby DE24 3HE (GB)
(74) Representative: Rolls-Royce plc

(56) References cited:
- FR-A- 955 995
- FR-A- 1 059 654
- GB-A- 827 027
- US-A- 5 653 581
- US-A1- 2006 010 879

## Description

The present invention relates to casing arrangements and more particularly to casing arrangements utilised in gas turbine engines.

United Kingdom Patent number GB827027 describes an arrangement for mounting a reaction-propulsion engine to an aircraft. French Patent number FR1059654 describes an arrangement for joining two cylindrical bodies of different diameters.

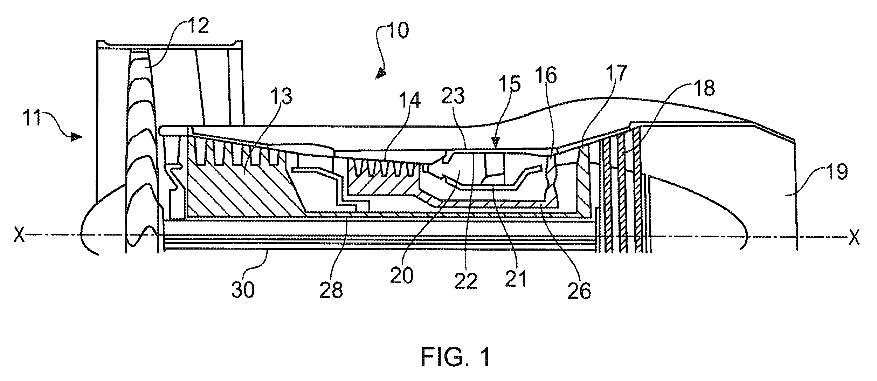

Referring to Fig. 1, a gas turbine engine is generally indicated at 10 and comprises, in axial flow series, an air intake 11, a propulsive fan 12, an intermediate pressure compressor 13, a high pressure compressor 14, a combustor 15, a turbine arrangement comprising a high pressure turbine 16, an intermediate pressure turbine 17 and a low pressure turbine 18, and an exhaust nozzle 19.

The gas turbine engine 10 operates in a conventional manner so that air entering the intake 11 is accelerated by the fan 12 which produce two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustor 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbines 16, 17 and 18 respectively drive the high and intermediate pressure compressors 14 and 13 and the fan 12 by suitable interconnecting shafts.

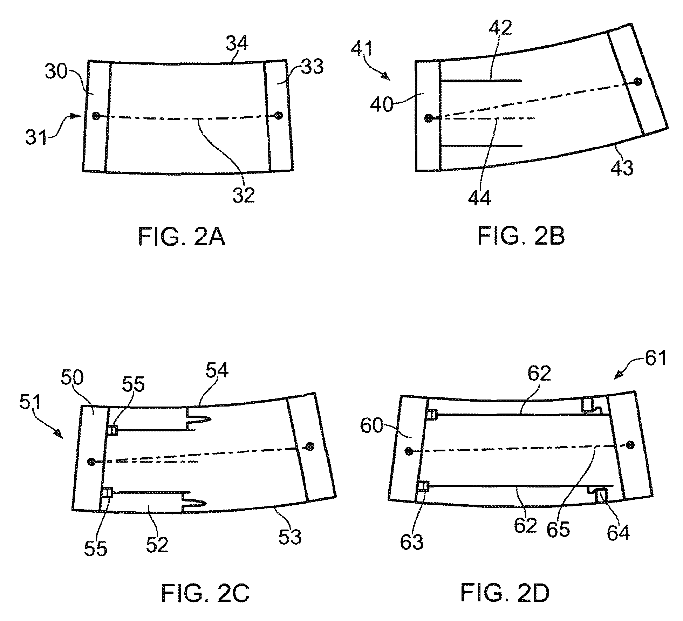

In view of the above, it will be appreciated that gas turbine engines are subject to significant reaction forces. Other machines are also subject to similar reaction forces. Fig 2 provides a schematic illustration of the forces acting on a gas turbine engine as a result of reacting the generated thrust through the engine. The results of such generated thrust are to create a carcass bend as illustrated below with regard to Fig 2A whereby the rear bearing support structure is pulled upward, relative to the front bearing support structure typically associated with a high pressure compressor stage. The result of such reaction forces presents asymmetric loading and is particularly presented upon a combustion outer casing (COC).

Previously a number of approaches have been taken to allow mounting of the high pressure compressor bearing support structure within the combustion outer casing (COC). In some engines the high pressure compressor casing is mounted from a combustion support cone. The combustion support cone extends back to the rear bearing support structure, thereby isolating the high pressure compressor casing from the combustion outer casing (COC) and its asymmetric loading. This is particularly illustrated with regard to Fig 2D below. The rear of the combustion support cone is engaged in a cross-key arrangement with the rear bearing support structure which is relatively stiff and rigid and allows torque to be reacted and so provides radial location for the rear of the high pressure compressor casing. It will also be appreciated that the shape of the high pressure compressor casing is maintained concentric with the high pressure compressor rotors due to the mounting of the casing between the stiff front and rear bearing structures via an appropriate inter-casing arrangement.

Fig 2, as illustrated above, shows four examples of high pressure compressor casings and their mountings. In Fig 2A, as can be seen, an inter-casing 30 at the front of a schematic engine arrangement 31, remains round towards a high pressure compressor end (HPC) of the arrangement 31. A centre line 32 of the high pressure spool is lifted upwards at a high pressure turbine end (HPT) of the arrangement 31, where a rear casing part is presented upon rear bearing support structure 33. Due to the asymmetric nature of loading a central proportion 34 of a compression outer-casing (COC) deflects into an oval cross-section which may result in rubbing with rotor elements (not shown).

It is to avoid this oval deformation as well as other problems caused by the asymmetric loading in the arrangement 31 that other alternatives (Fig 2B to 2D) have been provided.

As illustrated in Fig 2B showing a front inter-casing presented upon a first bearing support structure 40 in an engine arrangement 41. The front inter-casing remains essentially round. In order to avoid asymmetric loading causing problems, a high pressure compressor casing 42 is cantilevered from the casing 40 and presented upon front bearing support structures such that the casing 42 remains essentially round. It will be noted that the combustion outercasing (COC) 43 again is deflected and therefore intermediate portions will have an oval shape but the high pressure compressor casing 42 will have a centre line 44, which is substantially stable within the cantilevered casing 42 and so is less likely to present rotor rub problems.

A further alternative to avoid distortion of the high pressure compressor casing is illustrated in Fig 2C. In such circumstances, within an engine arrangement 51, a front inter-casing 50 remains substantially round whilst as a result of asymmetric load a combustion outer casing (COC) 53 becomes distorted. By provision of hair pin associations (54) between the combustion outer casing (COC) 53 and the high pressure compressor casing 52, most of the distortion can be isolated from the high pressure compressor casing 52. It will be noted that front bearing supports 55 allow pivot of the casing 52 upon the hair pin associations 54 maintaining a reasonable degree of concentricity of the casing 52 and therefore avoiding substantial rubbing between rotors within the casing 52. The approach taken in Fig 2C can be considered a single skin concept. A further alternative, as depicted in Fig 2D is to provide a double skin approach. A front inter-casing 60 is presented upon front bearing support structures 63 with a high pressure compressor casing 62 engaged on bearings 63, 64 in an engine arrangement 61. In such circumstances a centre line 65, although again distorted upwards, still remains a common axis for the casing 62, which is substantially round and evenly concentric about the centre line 65 as a common axis.

Although the above approaches can be configured with reasonable success in service with regard to engine arrangements, significant problems can occur with regard to the front casing, due to wear at the inter-case and due to the rear of the combustion support becoming jammed as a result of turbine effects. It will also be understood that accommodation within a gas turbine engine may be difficult. Where bleed air may be required for cooling or other effects, an asymmetric construction is produced due to ducting which has to pass through the combustion support cone. Such asymmetric construction is then repeated in the high pressure compressor casing. It will also be appreciated that the combustion outer casing (COC) required for a double skin approach as depicted in Fig 2D is significantly larger than a single skin casing in order to accommodate the necessary structure within. Such an approach results in a significantly heavier and costlier approach for a double skin compared to the single skin design as depicted in Fig 2C.

The single skin approach as depicted in Fig 2C is limited in that it is not possible to completely isolate the high pressure compressor casing from the influence of combustion outer casing (COC) asymmetric loading under carcass bending and other asymmetric loading from other sources such as thrust mountings in the region of inter-casing structures. Furthermore, as the combustion outer casing (COC) bends, the centre of the common axis of the high pressure compressor casing will shift relative to the centre line of the high pressure compressor rotor assembly resulting in asymmetric rubbing of the rotor tips. The approach with regard to providing high pressure compressor casings, which have been cantilevered from the interface flange as depicted in Fig 2B means that carcass bending still occurs, such that there is a divergence in the common axis between the rotor centre line and the casing centre line, again resulting in asymmetric rubbing in the high pressure compressor stage of an engine arrangement even though the high pressure compressor casing remains substantially round.

The above problems can occur in a number of situations in addition to those mentioned with gas turbine engines where there is asymmetric loading between casings typically presented upon respective bearing support structures.

In accordance with aspect of the present invention there is provided a casing arrangement for a gas turbine engine, according to claim 1.

Typically, the respective spacing is substantially equal about the periphery of the inner casing and the outer casing. Alternatively, the spacing is unequal and respective spacings between adjacent hairpin segments chosen to provide asymmetric dislocation of distortion between the inner casing and the outer casing. Unequal spacing or unequal thickness of the hairpins can compensate for the installation effects, such as that due to gravity.

Typically, there are provided two hairpin mountings configured to extend in opposite directions away from each other.

Typically, the hairpin mounting comprises a ring extended between the inner casing and the outer casing.

Possibly, the hairpin mounting includes a thrust ring. Possibly, the hairpin mounting includes a thrust plate. Possibly, the hairpin mounting includes a plurality of thrust plates distributed about the periphery of the inner casing and the outer casing with a desired spacing. Possibly, the desired spacing of the thrust plates is to provide an asymmetric reaction in the casing arrangement to distribution forces.

Possibly, the hairpin segments are of variable configuration. Possibly, the variable configuration relates to material type and/or material treatment and/or material thickness and/or size. Possibly the variable configuration relates to radius of bend and/or length of lateral parts of the hairpin segments.

Aspects of the present invention will now be described by way of example and with reference to the accompanying drawings in which:-
Fig 3 is a part side cross section of a casing arrangement in accordance with aspects of the present invention;
Fig 4 is a pictorial representation of a hairpin mounting in accordance with aspects of the present invention; and,
Fig 5 is a pictorial illustration of a thrust ring incorporating thrust plates in accordance with aspects of the present invention.

As indicated above, problems occur with respect to loadings within casing arrangements for gas turbine engines as a result of reaction forces within the gas turbine engine. As illustrated above with respect to Fig 2 such reaction forces can create asymmetric distortion between a respective inner casing and an outer casing resulting in variations with regard to gaps between a rotating fan blade assembly and the inner casing within which the assembly is located. Aspects of the present invention relate to providing an improved casing arrangement and in particular with regard to mounting high pressure compressor casings within a more weight efficient single skin configuration as depicted particularly with regard to Fig 2C above. As indicated above use of cones or hairpins bolted between an inner high pressure compressor casing and a combustion outer casing will not completely attenuate all asymmetry loading between the combustion outer casing and therefore will yield asymmetric tip clearances to the high pressure compressor rotor assembly and so reduce efficiency and operability such as with regard to a reduced surge margin.

By aspects of the present invention and in particular provision of hairpin mountings, significant improvements on a like-for-like basis are achieved in terms of attenuating and dislocating asymmetric distortion as present to the high pressure compressor inner casing. Typically, by judicious choice of the configuration, spacing and material type utilized with respect to the hairpin segments, a reduction in asymmetric transfer in the order of 60% can be achieved by using segmented hairpins over a continuous cone hairpin as described above with regard to Fig 2.

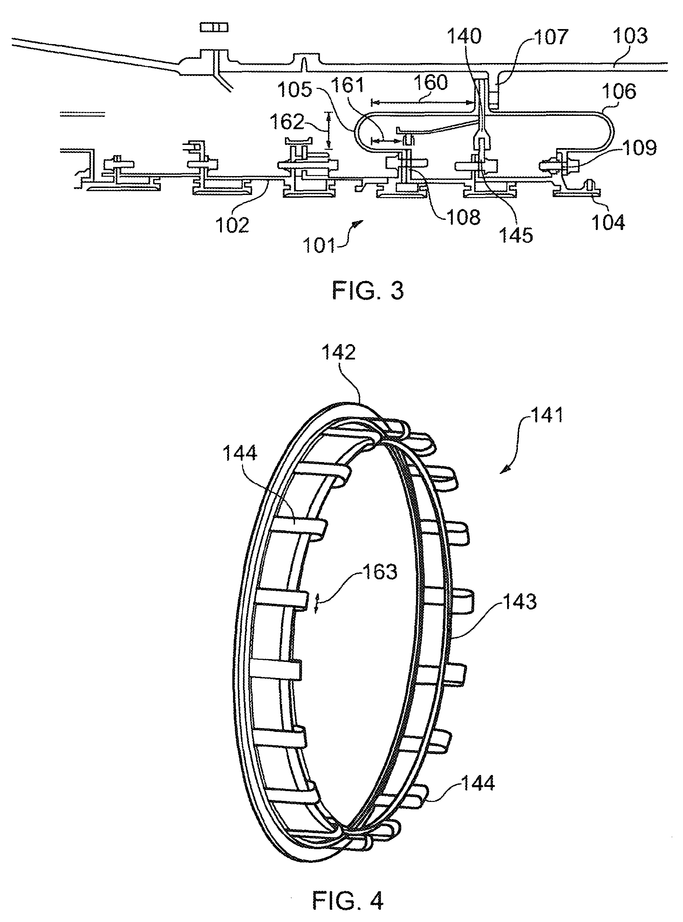

Fig 3 provides a part cross section of a casing arrangement 101 in accordance with aspects of the present invention. The arrangement 101 comprises an inner casing 102 and an outer casing 103. As indicated previously generally the inner casing 102 and the outer casing 103 are secured at one end by a robust mounting, typically in the form of a ring which will not distort in use. A distal end 104 of the inner casing 102 as indicated is supported upon hairpin mountings 105, 106. It will be noted that these hairpin mountings 105, 106 are substantially laterally orientated and extend between the casings 102, 103. Two hairpin mountings 105, 106 are depicted but in some circumstances a single hairpin mounting will be acceptable dependent upon providing the dislocation of distortions upon the inner casing 102 from the outer casing 103.

The hairpin mountings 105, 106 are secured upon a flange 107 associated with the outer casing 103. Other ends of the mountings 105, 106 are secured to similar flange mountings 108, 109 respectively associated with the inner casing 102. In such circumstances it will be appreciated by flexing the hairpin mountings 105, 106 there will be dislocation of distortion of the outer casing 103 from the inner casing 102 so reducing asymmetry of distortion and therefore problems with respect to variable gaps between a rotary component assembly located adjacent to and in the inner casing 102.

In a side cross section as depicted in Fig 3 the hairpins provided by the mountings 105, 106 are in a similar orientation to that depicted with regard to Fig 2C above but in accordance with aspects of the present invention the hairpin mountings 105, 106 are segmented. Such segmentation allows a reduction in weight but more importantly allows tuning of the dislocation between the distortion to the outer casing 103 from the inner casing 102. As indicated above with regard to Fig 2, such distortions will not be concentric or uniform between the respective casings 102, 103 and in such circumstances a solid hairpin arrangement will still provide inadequate dislocation between the distortions resulting as indicated in asymmetric distortion of the inner casing 102 and therefore variation in rotary assembly spacing to the casing 102.

Fig 4 provides a rear perspective view of a hairpin mounting component 141 in accordance with aspects of the present invention. As can be seen, the component 141 comprises concentric rings 142, 143 between which hairpin segments 144 extend. The hairpin segments 144 are spaced and distributed about the component 141 appropriately. As illustrated, typically such spacing is equal but more advantageously with regard to aspects of the present invention, the size, configuration and spacing of the segments 144 will be tuned to the particular requirements of an assembly of the component 141 within a casing arrangement 101 such as that depicted with regard to Fig 3.

As indicated generally, two hairpin mounting components 141 will be associated within a casing arrangement to extend with their hairpin segments 141 substantially in opposite directions. In terms of configuration with respect to the segments 144 at least it will be understood that these segments can be made from similar or different materials, material which has been worked or treated in different ways to provide different mechanical responses, the segments 144 could have different widths and thicknesses and hairpin loops in order for each segment to adjust their responsiveness to asymmetric distortion between the inner and outer casings as described above. In such circumstances the configuration and choice of dimensions for each, or the hairpin mounting component utilized in accordance with aspects of the present invention will depend upon operational requirements.

Returning to Fig 3, it will be understood in order to stiffen the combustion outer chamber a thrust ring 140 can be provided which reacts with the high pressure compressor thrust, through thrust plates 145 bolted to the high pressure compressor casing or to the inner casing.

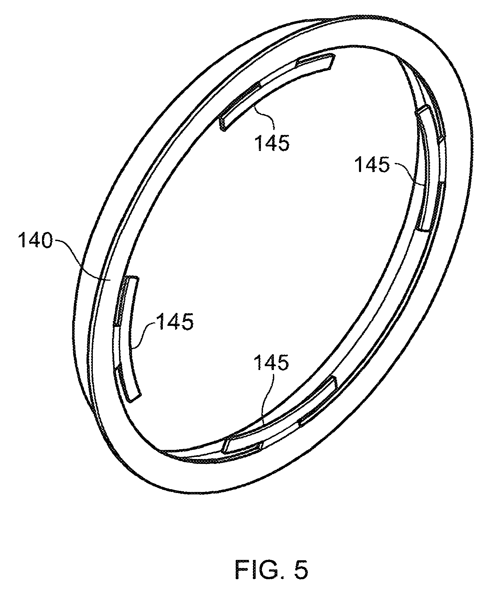

It will be appreciated that provision of such plates 145, throughout the periphery of the inter-space between the casings 2, 3 would generally negate adaptability for asymmetric distortion. In such circumstances, as depicted in Fig 5, utilizing similar reference numerals for comparison, a reduced number of thrust plates 145 are utilized, extending from the thrust ring 140. In the example illustrated in Fig 5, four thrust plates 145 are depicted, however more could be utilized if necessary, which extend for greater or lesser proportions of the circumference of the ring 140 and with different spacing to provide a tuned asymmetric distortion response. The reaction to the thrust plates 145 is purely through contact, such that there is no positive connection, allowing the ring 140 to move radially relative to the thrust plates thereby minimizing the asymmetric feed to enhance dislocation of distortion to the high pressure compressor (inner) casing. The thrust plates 145 and the hairpins 105, 106 are bolted to the combustion outer casing and so feed the thrust to the outer casing 103. It will also be appreciated that the thrust plates 145 can be configured to take torque loading by means of an appropriate mechanism such as mechanical dogs at their ends and which would minimize asymmetric feed and therefore improve dislocation of distortion through to the high pressure compressor (inner) casing. Alternatively, the high pressure compressor (inner) casing thrust could be reacted simply at the front of the high pressure compressor (inner) casing. In such circumstances the thrust plates 145 also provide a stiffening function to the combustion outer casing thereby reducing the asymmetry of distortion that could be fed into the hairpins 105, 106 and so reduce the duty cycling thereof.

By providing segmented hairpins 105, 106 it will be understood that radial location is provided for the inner high pressure compressor casing, whilst isolating the effects of distortion potentially received from the combustion outer casing. As indicated two hairpins 105, 106 are shown, however in some circumstances a single hairpin mounting can be utilized dependent upon requirements. Furthermore, the respective rings as depicted in Fig 4 which extend in opposite directions may have different numbers of hairpin segments with different spacings and configurations to provide an appropriate response to distortion in order to dislocate that distortion between the inner casing and the outer casing.

Generally, the hairpins, in accordance with aspects of the present invention, will be arranged to withstand typical normal 1 G during loading from the high pressure compressor (inner) casing within a gas turbine engine utilized for aircraft propulsion, flight manoeuvre loads and heavy landing scenarios. Such a capability with respect to the hairpins will allow operation without causing excessive movement of the high pressure compressor (inner) casing relative to the rotor resulting in heavy blade rubs in normal use.

As indicated above Fig 4 displays a uniform hairpin segment spacing. It will also be appreciated that as indicated hairpin mountings may be optimized by judiciously thickened discrete hairpin segments in the form of finger segments at 3 o'clock and 9 o'clock positions in the component 141. In such circumstances G loading strengthening is provided if necessary. Furthermore, conversely it will be appreciated that thinner fingers or increased inter-spacing can be provided in respect to some other hairpin elements between regions where combustion outer casing asymmetry is highest so increasing isolation performance of a casing arrangement in accordance with aspects of the present invention.

It will be appreciated that the flexibility of hairpins and segmentation precludes the use of present arrangements for transmission of torque and thrust. In such circumstances, as illustrated above, thrust and torque are reacted by other means such as the thrust plates and associated thrust rings as described above.

The hairpin mounting components 141, as described above, may be susceptible to vibration. Such vibration of a flexible ring may be of concern to a designer. However, through use of contact of the thrust plates 145 with the thrust ring 140, such vibrations will be significantly dampened. Such dampening may be enhanced by appropriate design and appropriate damping arrangements.

In accordance with aspects of the present invention a single skin casing arrangement as described above with regard to Fig 2 may be utilized whilst offering improved asymmetric isolation over previous single skin casing arrangements. Such improved asymmetric distortion isolation will reduce asymmetric rubs experienced by inner casings against a rotary assembly such as a fan blade assembly. Such reduction in rubs will improve both efficiency and operability with regard to an inner case such as a high pressure compressor casing within a gas turbine engine. It will be understood that a single skin approach in a casing arrangement generally will reduce costs as well as weight over a double skin design for a similar casing arrangement.

Aspects of the present invention have particular applicability with regard to gas turbine engines in which an inner casing, such as a high pressure compressor casing is located within a combustion outer casing such that reaction forces can distort the interrelationship between the casings. Such gas turbine engines may be utilized in aircraft as well as with regard to marine and land based systems.

It will be noted that the hairpin mountings, in accordance with aspects of the present invention, are substantially dynamic. In such circumstances, in an operational cycle there will be a degree of flexibility required and with regard to gas turbine engines this flexibility will be at elevated temperatures. In such circumstances the material from which the hairpin segments 105, 106 (Fig 3) are formed must be appropriately chosen to withstand such elevated temperatures as well as to provide the degree of flexibility within acceptable operational variations and tolerances. It will also be understood that hairpin mountings in accordance with aspects of the present invention, in such circumstances will require periodic replacement. Thus as depicted in Fig 3 generally the hairpin mountings will be secured through appropriate bolts to the casings 103, 104 such that the hairpin mounting components can be replaced as required. It will be appreciated other forms of securing the hairpin mounting components may be utilized where appropriate or available. Similarly, the thrust plates 145 will be subject to wear in the engagement with a thrust ring 140. Thus, again as illustrated these thrust plates 145 will typically be secured through bolt assemblies to allow ready removal during overhaul, replacement and repair.

It will be understood that it is the flexibility of the hairpins 105, 106 (Fig 3) which provides the dislocation of distortion in accordance with aspects of the present invention. This flexibility as illustrated with respect to hairpin 105 will depend upon the absolute and relative values for lateral lengths 160, 161 and the end subtended over the width 162. These values can be adjusted as indicated above by varying the thickness of the hairpin 105 either uniformly over the length of the hairpin 105 or over segments of the hairpin 105. It will also be appreciated that flexibility is substantially dependent upon the materials forming the hairpin 105 and as indicated the relative spacing in between the hairpin segments in a mounting in accordance with aspects of the present invention. Further factors which may be adjusted include hairpin width 163. It will also be understood that although adding design complexity, hairpins may be waisted or tapered or have cut out segments to alter their flexibility in use. It will also be appreciated that the hairpins may incorporate ribs or be pressed with other reinforcing features in order to alter their flexibility response. In such circumstances a component 141 as depicted in Fig 4 may be formed with equally spaced hairpin segments 144 but each one of these hairpin segments altered to provide a different flexibility of response in use dependent upon its position in the casing arrangement.

Modifications and alterations to aspects of the present invention will be appreciated by those skilled in the art. Thus, although depicted with regard to concentric cylindrical casings, it will also be understood that other casing formats may be utilized, including oval or rectangular cross section inner and outer casing configurations with appropriate consideration with regard to positioning of the hairpin segments to isolate and dislocate asymmetric distortion between the casings.

## Claims

1. A rotor casing arrangement for a gas turbine engine, the arrangement comprising an inner casing (102) and an outer casing (103) secured at one end to a common robust mounting about a common centre line, **the arrangement characterised in that** the distal ends of the inner casing and the outer casing are coupled to a hairpin mounting (105, 106, 141) extending substantially laterally between the inner casing and the outer casing, the hairpin mounting comprising a plurality of hairpin segments (144) spaced relative to each other with a respective spacing between each hairpin segment to provide at least partial dislocation of distortion between the inner casing and the outer casing towards their distal ends away from the robust mounting.

2. An arrangement as claimed in claim 1 wherein the respective spacing is substantially equal about the periphery of the inner casing and the outer casing.

3. An arrangement as claimed in claim 1 wherein the spacing is unequal and respective spacings between adjacent hairpin segments chosen to provide asymmetric dislocation of distortion between the inner casing and the outer casing.

4. An arrangement as claimed in claim 1 or claim 2 wherein there are provided two hairpin mountings configured to extend in opposite directions away from each other.

5. An arrangement as claimed in any preceding claim wherein the or each hairpin mounting comprises a ring (142,143) extended between the inner casing and the outer casing.

6. An arrangement as claimed in any preceding claim wherein the hairpin mounting includes a thrust ring (140).

7. An arrangement as claimed in any preceding claim wherein the hairpin mounting includes a thrust plate (145).

8. An arrangement as claimed in claim 7 wherein the hairpin mounting includes a plurality of thrust plates distributed about the periphery of the inner casing and the outer casing with a desired spacing.

9. An arrangement as claimed in claim 8 wherein the desired spacing of the thrust plates is to provide an asymmetric reaction in the casing arrangement to distortion forces.

10. An arrangement as claimed in any preceding claim wherein the hairpin segments are of variable configuration.

11. An arrangement as claimed in claim 10 wherein the variable configuration relates to material type and/or material treatment and/or material thickness and/or size.

12. An arrangement as claimed in claim 10 or claim 11 wherein the variable configuration relates to radius of bend and/or length of lateral parts of the hairpin segments.

13. A gas turbine engine incorporating a casing arrangement as claimed in any preceding claim.

## Patentansprüche

1. Rotorgehäuseanordnung für einen Gasturbinenmotor, wobei die Anordnung ein inneres Gehäuse (102) und ein äußeres Gehäuse (103) umfasst, die an einem Ende an einer gemeinsamen robusten Halterung um eine gemeinsame Mittellinie angeordnet sind, wobei die Anordnung **dadurch gekennzeichnet ist, dass** die distalen Enden des inneren Gehäuses und des äußeren Gehäuses mit einer Haarnadelhalterung (105, 106, 141) gekoppelt sind, die sich im Wesentlichen lateral zwischen dem inneren Gehäuse und dem äußeren Gehäuse erstreckt, wobei die Haarnadelhalterung eine Mehrzahl von Haarnadelsegmenten (144) umfasst, die im Verhältnis zueinander mit Zwischenabständen mit einem entsprechenden Abstand zwischen jedem Haarnadelsegment angeordnet sind, um wenigstens eine teilweise Lageveränderung der Verzerrung zwischen dem inneren Gehäuse und dem äußeren Gehäuse in Richtung ihrer distalen Enden von der robusten Halterung weggehend vorzusehen.

2. Anordnung nach Anspruch 1, wobei der entsprechende Abstand um die Peripherie des inneren Gehäuses und des äußeren Gehäuses im Wesentlichen gleich ist.

3. Anordnung nach Anspruch 1, wobei der Abstand ungleich ist, und wobei die entsprechenden Abstände zwischen benachbarten Haarnadelsegmenten so ausgewählt sind, dass eine asymmetrische Lageveränderung der Verzerrung zwischen dem inneren Gehäuse und dem äußeren Gehäuse vorgesehen wird.

4. Anordnung nach Anspruch 1 oder 2, wobei zwei Haarnadelhalterungen vorgesehen sind, die so konfiguriert sind, dass sich sich voneinander weggehend in entgegengesetzte Richtungen erstrecken.

5. Anordnung nach einem der vorstehenden Ansprüche, wobei die oder jede Haarnadelhalterung einen Ring (142, 143) umfasst, der sich zwischen dem inneren Gehäuse und dem äußeren Gehäuse erstreckt.

6. Anordnung nach einem der vorstehenden Ansprüche, wobei die Haarnadelhalterung einen Druckring (140) aufweist.

7. Anordnung nach einem der vorstehenden Ansprüche, wobei die Haarnadelhalterung eine Druckscheibe (145) aufweist.

8. Anordnung nach Anspruch 7, wobei die Haarnadelhalterung eine Mehrzahl von Druckplatten aufweist, die um die Peripherie des inneren Gehäuses und des äußeren Gehäuses mit gewünschten Zwischenabständen verteilt sind.

9. Anordnung nach Anspruch 8, wobei der gewünschte Zwischenabstand der Druckplatten dazu dient, eine asymmetrische Reaktion in der Gehäuseanordnung auf Verzerrungskräfte vorzusehen.

10. Anordnung nach einem der vorstehenden Ansprüche, wobei die Haarnadelsegmente eine variable Konfiguration aufweisen.

11. Anordnung nach Anspruch 10, wobei die variable Konfiguration die Materialart und/oder die Materialbehandlung und/oder die Materialdicke und/oder die Größe betrifft.

12. Anordnung nach Anspruch 10 oder 11, wobei die variable Konfiguration den Krümmungsradius und/oder die Länge lateraler Teile der Haarnadelsegmente betrifft.

13. Gasturbinenmotor, der eine Gehäuseanordnung nach einem der vorstehenden Ansprüche inkorporiert.

## Revendications

1. Agencement de boîtier de rotor pour turbine à gaz, l'agencement comprenant un boîtier interne (102) et un boîtier externe (103) fixés au niveau d'une extrémité à une fixation robuste commune sur un axe commun, l'agencement étant **caractérisé en ce que** les extrémités distales du boîtier interne et du boîtier externe sont couplées à une fixation en U (105, 106, 141) s'étendant sensiblement latéralement entre le boîtier interne et le boîtier externe, la fixation en U comprenant une pluralité de segments en U (144) espacés les uns des autres avec un espacement respectif entre chaque segment en U pour fournir au moins une dislocation partielle de distorsion entre le boîtier interne et le boîtier externe vers leurs extrémités distales à l'opposé de la fixation robuste.

2. Agencement selon la revendication 1, l'espacement respectif étant sensiblement égal vers la périphérie du boîtier interne et du boîtier externe.

3. Agencement selon la revendication 1, l'espacement étant inégal et des espacements respectifs entre des segments en U adjacents choisis pour fournir une dislocation asymétrique de distorsion entre le boîtier interne et le boîtier externe.

4. Agencement selon la revendication 1 ou 2, deux fixations en U étant conçues pour s'étendre dans des directions opposées l'une de l'autre.

5. Agencement selon l'une quelconque des revendications précédentes, la ou chaque fixation en U comprenant une bague (142, 143) s'étendant entre le boîtier interne et le boîtier externe.

6. Agencement selon l'une quelconque des revendications précédentes, la fixation en U comprenant une bague de butée (140).

7. Agencement selon l'une quelconque des revendications précédentes, la fixation en U comprenant une plaque de poussée (145).

8. Agencement selon la revendication 7, la fixation en U comprenant une pluralité de plaques de poussée réparties sur la périphérie du boîtier interne et du boîtier externe avec un espacement souhaité.

9. Agencement selon la revendication 8, l'espacement souhaité des plaques de poussée visant à fournir une réaction asymétrique dans l'agencement de boîtier aux forces de distorsion.

10. Agencement selon l'une quelconque des revendications précédentes, les segments en U étant de configuration variable.

11. Agencement selon la revendication 10, la configuration variable concernant le type de matériau et/ou le traitement du matériau et/ou l'épaisseur du matériau et/ou la taille.

12. Agencement selon la revendication 10 ou 11, la configuration variable concernant le rayon de courbure et/ou la longueur des parties latérales des segments en U.

13. Turbine à gaz comprenant un agencement de boîtier selon l'une quelconque des revendications précédentes.
